# DEMANDE DE BREVET EUROPEEN

(11) **EP 4 787 023 A1**
(43) Date de publication de la demande: **05.08.2026**
(21) Numéro de dépôt: 26155901.7
(22) Date de dépôt: 03.02.2026
(51) Int. Cl.: G01S 19/03

(54) **MÉTHODE DE POSITIONNEMENT GNSS COLLABORATIF**

(30) Priorité: 03.02.2025 FR 2501057
(71) Demandeur: THALES, 92190 Meudon (FR)
(72) Inventeur: HEURGUIER, Dominique, 92622 GENNEVILLIERS CEDEX (FR); YWANNE, Frédérique, 92622 GENNEVILLIERS CEDEX (FR)
(74) Mandataire: Lavoix

(57) **Abrégé**

La présente invention concerne une méthode de positionnement satellitaire GNSS mettant en œuvre plusieurs satellites et plusieurs récepteurs GNSS comprenant une étape d'initialisation (110,120) dans laquelle chaque récepteur GNSS estime de manière indépendante sa position initiale et les positions des satellites qu'il a en visibilité, une étape estimation (130) initiale (***X̂***(0)) d'un vecteur d'état étendu (***X***), par concaténation d'un premier vecteur d'état (***X_{RX}***) donnant les positions et les décalages d'horloge des récepteurs GNSS et d'un second vecteur d'état (***X_{SAT}***) donnant les positions des différents satellites, et, jusqu'à ce qu'un critère d'arrêt (170) soit satisfait, une séquence d'itérations successives, chaque itération comprenant une étape de mesure (140) par chaque récepteur GNSS (*RXᵢ*) des pseudodistances (*ρ_{i,j}*) relatives à chaque satellite en visibilité, une étape de construction (150) d'un vecteur d'observation étendu (***Y***) donnant lesdites pseudodistances pour chacun des récepteurs GNSS et les positions des satellites (***Y_{SAT}***) en visibilité de chaque récepteur, une étape de mise à jour (160) d'une estimation du vecteur d'état étendu, les positions des récepteurs GNSS et/ou les décalages de leurs horloges internes respectives étant donné(e)s par l'estimation du vecteur d'état étendu obtenue à la dernière itération.

## Description

### DOMAINE TECHNIQUE

La présente invention concerne de manière générale le domaine du positionnement et de la navigation GNSS (*Global Navigation Satellite System*)*,* et plus particulièrement le domaine du positionnement GNSS collaboratif. Elle peut notamment être mise en œuvre par un essaim de plateformes mobiles équipées de récepteurs GNSS, connectées par un réseau de type MANET (*Mobile Ad hoc NETwork*)*,* VANET (*Vehicle Ad hoc NETwork*)*,* ou FANET ( *Flying Ad hoc NETwork*)*.*

### ÉTAT DE LA TECHNIQUE ANTERIEURE

Les systèmes de positionnement satellitaires GPS, GALILEO, GLONASS, BEIDOU sont bien connus de l'état de la technique sous l'acronyme général GNSS. De manière classique, ces systèmes satellitaires permettent à un récepteur GNSS d'estimer sa position par multilatération à partir de signaux synchronisés reçus d'au moins quatre satellites. Outre sa position, le récepteur GNSS peut estimer sa vitesse et le temps de l'horloge satellitaire, les trois paramètres estimés étant regroupés sous le terme PVT (*Position Velocity Time*)*.*

L'estimation de la position (et plus généralement l'estimation PVT) d'un récepteur GNSS est obtenue à partir des pseudodistances mesurées avec les différents satellites. Les mesures de pseudodistances peuvent être affectées par de nombreuses sources d'erreurs par exemple la dérive de l'horloge satellitaire par rapport à l'horloge de synchronisation du système satellitaire, les erreurs de position des différents satellites, les multitrajets, les erreurs introduites par les retards de propagation du signal satellitaire dans la troposphère et dans l'ionosphère. A ces sources d'erreurs s'ajoute bien entendu le bruit du récepteur.

Si l'on suppose que le récepteur GNSS est situé dans une zone dégagée (c'est-à-dire en dehors d'une zone urbaine où la contribution des multitrajets, due à des réflexions multiples, peut être importante) et que la dérive d'horloge du récepteur par rapport à l'horloge satellitaire est parfaitement compensée, les principales sources d'erreurs restantes sont celles liées aux erreurs de temps de propagation du signal (notamment en raison de sa vitesse de popagation dans l'ionosphère plus faible que dans le vide et des phénomènes de réfraction) et, dans une moindre mesure, les erreurs de position des satellites du système GNSS.

Afin de remédier à ces erreurs, il est connu d'utiliser un système GPS différentiel ou DGPS (*Differential GPS*)*.* Un système DGPS met à profit le fait que les erreurs de position des satellites et les erreurs de temps de propagation sont identiques ou proches pour des récepteurs d'une même zone géographique et pour des instants de mesure (*epochs*) proches. On rappelle à cet égard que la position d'un satellite à un instant donné est déterminée à partir des paramètres d'éphémérides transmis dans le message de navigation GPS émis par ce satellite. Si la position de l'un des récepteurs dans ladite zone est parfaitement connue (récepteur de référence), l'effet combiné des différentes erreurs peut être estimé et le résultat transmis (par voie radio conventionnelle) à l'ensemble des récepteurs de la zone. Chaque récepteur de la zone peut alors compenser cet effet sur les pseudodistances qu'il a mesurées et corriger son estimation PVT.

On distingue généralement les systèmes DGPS locaux ou LADGPS (*Local Area DGPS*) utilisant une station terrestre équipée d'un récepteur GNSS de référence (station de référence) et les systèmes DGPS étendus ou WADGPS (*Wide Area DGPS*) utilisant une pluralité de stations de référence déployées dans une zone étendue, ces stations transmettant les signaux de correction à une station mère qui les diffuse ensuite via une constellation de satellites géostationnaires aux récepteurs GNSS de la zone.

Les sytèmes LADGPS et WADGPS permettent d'obtenir des estimations PVT avec une faible marge d'erreur. Toutefois, ces systèmes supposent de disposer d'au moins une station de référence dans la zone géographique. En outre, les systèmes LADGPS sont relativement peu répandus et ne se prêtent pas à un déploiement *ad hoc.* Enfin, les systèmes WADGPS sont coûteux et ne sont développés que pour certaines applications spécifiques.

Le but de la présente invention est par conséquent de proposer une méthode de positionnement GNSS qui permette de corriger les erreurs de temps de propagation des signaux satellitaires et/ou les erreurs de position des satellites d'un système GNSS sans nécessiter l'installation de stations de référence.

A cet effet, l'invention a pour objet une méthode de positionnement satellitaire GNSS mettant en œuvre une pluralité de satellites et une pluralité de récepteurs GNSS voisins, chaque récepteur GNSS ayant au moins 4 satellites en visibilité, et partageant avec l'un des autres récepteurs GNSS voisins au moins un satellite en visibilité et ne partageant pas avec lui au moins un autre satellite en visibilité, ladite méthode étant originale en ce qu'elle comprend :
- une étape d'initialisation dans laquelle chaque récepteur GNSS estime de manière indépendante sa position initiale et les positions des satellites qu'il a en visibilité, à partir de messages d'éphémérides reçus de ces derniers ;
- une étape de construction d'une estimation initiale (***X̂***(0)) d'un vecteur d'état étendu **(*X*),** ledit vecteur d'état étendu étant obtenu par concaténation d'un premier vecteur d'état (***X_{RX}***) donnant les positions et les décalages d'horloge des récepteurs GNSS par rapport à une horloge de référence satellitaire et d'un second vecteur d'état (***X_{SAT}***) donnant les positions des différents satellites ;
et, jusqu'à ce qu'un critère d'arrêt soit satisfait, une séquence d'itérations successives, chaque itération comprenant elle-même:
- une étape de mesure par chaque récepteur GNSS (*RXᵢ*) des pseudodistances (*ρ_{i,j}*) relatives à chaque satellite qu'il a en visibilité ;
- une étape de construction d'un vecteur d'observation étendu **(*Y*)** par concaténation d'un troisième vecteur (***Y_{PR}***) donnant lesdites pseudodistances pour chacun des récepteurs GNSS et d'un quatrième vecteur donnant les positions des satellites (***Y_{SAT}***) en visibilité de chaque récepteur;
- une étape de mise à jour d'une estimation du vecteur d'état étendu à partir de l'estimation de ce vecteur obtenue à l'itération précédente, du vecteur d'observation étendu (***Y***(***t***) obtenu à l'étape courante et d'une matrice géométrique globale dépendant des vecteurs directeurs des droites joignant chacun des récepteurs GNSS aux satellites qu'il a en visibilité ;
les positions des récepteurs GNSS et/ou les décalages de leurs horloges internes respectives étant alors donné(e)s par l'estimation du vecteur d'état étendu obtenue à la dernière itération.

Avantageusement, la matrice géométrique globale est une matrice de taille (*K +* 3*M*) × (4*N* + 3*M*) où *N* est le nombre de récepteurs GNSS, *M* est le nombre de satellites et *K* est le nombre de pseudodistances mesurées par l'ensemble des récepteurs GNSS, définie par : ${H}_{G} = \left[\begin{matrix}H & S \\ {0}_{3 M \times 4 N} & {I}_{3 M}\end{matrix}\right] avec H = \left[\begin{matrix}{H}_{1} & ⋯ & {0}_{4}^{T} \\ ⋮ & ⋱ & ⋮ \\ {0}_{4}^{T} & ⋯ & {H}_{N}\end{matrix}\right] et$ $S = \left[\begin{matrix}{S}_{1} & ⋯ & {0}_{3}^{T} \\ ⋮ & ⋱ & ⋮ \\ {0}_{3}^{T} & ⋯ & {S}_{N}\end{matrix}\right] avec {S}_{i} = \left[\begin{matrix}{u}_{i , j \left(1\right)}^{T} \\ ⋮ \\ {u}_{i , j \left(Ki\right)}^{T}\end{matrix}\right]$ où **0**_{**3*M***×**4*N***} est la matrice nulle de taille *3M* × *4N,* ***I*_{3*M*}** est la matrice unité de taille 3*M* × *3M,* **0₄** et **0₃** les vecteurs-colonne nuls de taille 4 et 3 respectivement, ***H*₁***.*..***H_{N}*** les matrices géométriques de chacun des récepteurs GNSS, **u**_{*i,j*(1)},...,***u***_{*i,j*(*Ki*)} sont les vecteurs directeurs des droites joignant le récepteur GNSS *RXᵢ* et les satelittes en visibilité de *RXᵢ*

L'étape de mise à jour du vecteur étendu peut être alors effectuée au moyen de $\hat{X} \left(t\right) = \hat{X} \left(t-1\right) + δ \hat{X \left(t\right)}$ avec $δ \hat{X \left(t\right)} = {\left.\left({H}_{G}{\left(t\right)}^{T}W{H}_{G}\left(t\right)\right)\right)}^{- 1} {H}_{G} {\left(t\right)}^{T} W δ Y \left(t\right)$ où ***W*** est une matrice de pondération , ***δY***(***t***) est la différence entre le vecteur d'observation étendu construit à l'itération courante et un vecteur d'observation théorique ***h***(***X̂***(***t** -* 1))*, **t*** est l'indice temporel de l'itération courante, et ***t* - 1** celui de l'itération précédente.

De préférence, la matrice de pondération est l'inverse de la matrice de covariance de ***δY***(***t***)*.* Le vecteur d'état étendu put faire l'objet d'un filtrage de Kalman.

Selon un mode de réalisation centralisée, dans une étape préalable à l'étape d'initialisation, chacun des récepteurs GNSS établit la liste des satellites qu'il a en visibilité et les transmet à une unité de gestion centralisée, et que cette dernière construit un graphe de visibilité biparti dont les nœuds sont lesdits récepteurs GNSS et lesdits satellites, les récepteurs GNSS dont les degrés étant inférieurs à 4 n'étant pas compris dans ledit graphe, une arête reliant un récepteur GNSS à un satellite si ce dernier est en visibilité du premier.

L'unité de gestion centralisée effectue alors une décomposition du graphe de visibilité en composantes connexes et élimine celles ayant une structure de graphe en étoile ainsi que celles ayant une structure de graphe complet, ladite méthode de positionnement GNSS opérant sur chacune des composantes connexes restantes.

De préférence, lors de l'étape d'initialisation, chacun des récepteurs GNSS transmet à l'unité de gestion centralisée l'estimation de sa position initiale ainsi que l'estimation des positions des satellites qu'il a en visibilité, et, à l'étape de mesure chacun des récepteurs GNSS transmet à l'unité de gestion centralisée les pseudodistances le séparant des satellites qu'il a en visibilité, les étapes de construction de valeur initiale du vecteur d'état étendu, de construction du vecteur d'observation étendu et de mise à jour du vecteur d'état étendu par itérations successives étant effectuées par le centre de gestion centralisée.

Au terme de la dernière itération, l'unité de gestion centralisée diffuse enfin à l'ensemble des récepteurs l'estimation courante du vecteur d'état étendu et chaque récepteur GNSS en déduit une estimation de sa position et/ou du décalage de son horloge interne par rapport à l'horloge de référence satellitaire.

Selon un mode de réalisation distribuée, dans une étape préalable à l'étape d'initialisation, chacun des récepteurs GNSS établit la liste des satellites qu'il a en visibilité et la diffuse aux récepteurs GNSS voisins, et au moins un récepteur GNSS sélectionne au moins un récepteur GNSS voisin avec lequel il partage un satellite en visibilité et ne partage pas un autre satellite en visibilité, seuls les récepteurs GNSS ayant au moins 4 satellites en visibilité étant pris en considération.

A l'étape d'initialisation, ledit récepteur GNSS et le au moins récepteur GNSS voisin sélectionné échangent alors entre eux les estimations de leurs positions initiales et les positions des satellites qu'ils ont en visibilité. A l'étape de mesure, ils échangent les pseudodistances les séparant des satellites qu'ils ont respectivement en visibilité, les étapes de construction de valeur initiale du vecteur d'état étendu, de construction du vecteur d'observation étendu et de mise à jour par itérations successives du vecteur d'état étendu étant effectuées en parallèle par chacun d'entre eux.

### BRÈVE DESCRIPTION DES DESSINS

L'invention apparaîtra plus clairement à la lecture de la description qui va suivre, donnée uniquement à titre d'exemple non limitatif, et faite en référence aux dessins dans lesquels :
[Fig. 1] La figure 1 illustre de manière schématique une méthode de positionnement GNSS selon un mode général de réalisation de l'invention ;
[Fig. 2] La figure 2 illustre de manière schématique un premier exemple de graphe de visibilité de récepteurs GNSS voisins ;
[Fig. 3] La figure 3 illustre de manière schématique un deuxième exemple de graphe de visibilité de récepteurs GNSS voisins ;
[Fig. 4] La figure 4 illustre de manière schématique un troisième exemple de graphe de visibilité de récepteurs GNSS voisins ;
[Fig. 5] La figure 5 illustre de manière schématique une méthode de positionnement GNSS selon un premier mode particulier de réalisation de l'invention ;
[Fig. 6] La figure 6 illustre de manière schématique une méthode de positionnement GNSS selon un second mode particulier de réalisation de l'invention ;

### EXPOSÉ DÉTAILLÉ DES MODES DE RÉALISATION

On considérera dans la suite un système de positionnement satellitaire GNSS composé d'une constellation de satellites notés *SAT*₁, *SAT*₂, ... , *SAT_{M},* ainsi qu'une pluralité de plateformes mobiles connectées équipées de récepteurs GNSS, notés *RX*₁, *RX*₁,..., *RX_{N}* susceptibles de recevoir des signaux GNSS émis par ces satellites. Le système de positionnement GNSS pourra être notamment un système GPS, GALILEO, GLONASS ou BEIDOU. Les connexions entre les plateformes mobiles pourront être des liaisons radio. Les plateformes mobiles pourront être par exemple des nœuds de réseaux *ad hoc* tels que les réseaux MANET, VANET ou FANET précités ou bien encore des terminaux mobiles d'un réseau de communication sans fil. Dans tous les cas, les plateformes mobiles sont situées dans une zone géographique *Z* de faible étendue spatiale. Par faible étendue spatiale, on entend que les récepteurs GNSS reçoivent des signaux affectés d'erreurs de temps de propagation similaires. Par souci de simplicité, les positions des récepteurs GNSS seront considérées comme confondues avec celles des plateformes sur lesquelles ils sont embarqués.

On notera par la suite ***X_{RXn}*** le vecteur constitué par les coordonnées cartésiennes *xₙ, yₙ, zₙ* du récepteur *RXₙ* dans un référentiel géocentrique ainsi que par le décalage de son horloge interne *(receiver clock bias), δtₙ,* par rapport à l'horloge de référence du système satellitaire GNSS, soit ${X}_{RXn}^{T} = \left[{x}_{n}, {y}_{n}, {z}_{n}, {δt}_{n}\right]$ et ***X_{RX}*** le vecteur de taille 4*N* obtenu par concaténation des vecteurs, ***X_{Rxn}**, n* = 1, ... , *N ,* c'est-à-dire : ${X}_{RX}^{T} = \left[{X}_{RX 1}^{T},{X}_{RX 2}^{T},…,{X}_{RXN}^{T}\right]$ . Les vecteurs ***X_{RXn}*** , *n* = 1, ... , *N* sont encore dénommés vecteurs d'état des différents récepteurs.

De manière similaire, on note ***X_{SATm}*** le vecteur constitué par les coordonnées cartésiennes *xs_{"1}, ysₘ*, *zsₘ* du satellite *SATₘ* dans ledit référentiel et ***X_{SAT}*** le vecteur de taille 3*M* obtenu par concaténation des vecteurs ***X_{SATm},** m* = 1,...,*M* , c'est-à-dire : ${X}_{SAT}^{T} = \left[{X}_{SAT 1}^{T},{X}_{SAT 2}^{T},…,{X}_{SATM}^{T}\right]$ . Les vecteurs ***X_{SATm},** m* = 1,..., *M* sont encore dénommés vecteurs d'état des différents satellites.

Enfin, on construit un vecteur d'état étendu ***X*** de taille 4*N +* 3*M* par concaténation des vecteurs d'état des récepteurs et des vecteurs d'état des satellites *:* ${X}^{T} = \left[{X}_{RX}^{T}, {X}_{SAT}^{T}\right]$.

Ce vecteur d'état étendu est estimé, ***X̂***, à partir d'un vecteur d'observation étendu ***Y*** résultant de la concaténation des mesures des pseudodistances entre satellites et récepteurs, d'une part, et des positions des satellites, d'autre part : ${Y}^{T} = \left[{Y}_{PR}^{T} {Y}_{SAT}^{T}\right]$.

La mesure de pseudodistance *ρ_{i,j}* entre un satellite *SATⱼ* et un récepteur *RXᵢ* peut s'exprimer sous la forme : ${ρ}_{i , j} = c \left({ToA}_{i , j}+{δt}_{i}-{E}_{j}+{ε}_{i , j}\right) = {d}_{i , j} + c . {δt}_{i} + c . {ε}_{i , j}$ où c est la vitesse de la lumière dans le vide, *ToA_{i,j}* est le temps d'arrivée au récepteur *RXᵢ* de la séquence PRN émise par le satellite *SATⱼ , δtᵢ* est le décalage d'horloge du récepteur *RXᵢ* par rapport à l'horloge de référence de la constellation satellitaire, *Eⱼ* est le temps d'émission de la séquence par le satellite *SATⱼ* et *ε_{i,j}* est un écart temporel résiduel dû aux erreurs non prises en compte dans le modèle et au bruit.

La distance *d_{i,j}* ne correspond généralement pas à la distance géométrique entre le satellite *SATⱼ* et le récepteur *RXᵢ*, notamment en raison du retard de propagation dans l'ionosphère/ troposphère et du décalage d'horloge du satellite en question par rapport à l'horloge de référence de la constellation satellitaire. Cette erreur est commune à tout couple de récepteurs voisins *RXᵢ*, *RXₖ* ayant le satellite *SATⱼ* en ligne de visée directe, autrement dit *SATⱼ* ∈ *V*(*RXᵢ*) ∩ *V*(*RXₖ*) où *V*(*RXᵢ*) représente l'ensemble des satellites de la constellation visibles depuis *RXᵢ.* Si l'on suppose on outre que *V*(*RXᵢ*) *≠ V*(*RXₖ*) *,* autrement dit qu'il existe au moins un satellite *SATⱼ,* non partagé en visibilité par *RXᵢ* et *RXₖ,* par exemple *SATⱼ,* ∈ *V*(*RXᵢ*) *\ V*(*RXₖ*), la prise en compte de la mesure de pseudodistance *ρ_{i,j}*, dans une estimation globale se traduit par une rééstimation de la position du satellite contrainte par une distance virtuelle du satellite *SATⱼ* qui est basée sur les durées réelles de propagation au lieu des durées théoriques (durées de propagation à la vitesse de la lumière en trajet rectiigne). Cette réestimation de la position du satellite *SATⱼ* qui intègre les erreurs de propagation s'accompagne d'une réduction de l'erreur d'estimation des positions des deux récepteurs.. Les récepteurs *RXᵢ*, *RXₖ* peuvent par conséquent améliorer de manière collaborative l'estimation de leurs positions respectives.

Si l'on revient au scenario à *N* récepteurs GNSS et *M* satellites décrit plus haut et que l'on suppose en outre : $∀ i ∈ \left\{1,…,N\right\} Card \left(V\left({RX}_{i}\right)\right) \geq 4$ $∃ i , k ∈ \left\{1,…,N\right\} tq . V \left({RX}_{i}\right) ∩ V \left({RX}_{k}\right) \neq ∅ et V \left({RX}_{k}\right) \neq V \left({RX}_{i}\right)$ autrement dit, on fait l'hypothèse que tous les récepteurs GNSS ont au minimum 4 satellites en visibilité et que, pour au moins un récepteur GNSS, il existe un récepteur voisin de celui-ci, ayant avec lui au moins un satellite partagé en visibilité et au moins un autre satellite non partagé en visibilité.

Dans une phase d'initialisation, chaque récepteur estime de manière indépendante sa position, par exemple à partir de son récepteur GNSS fonctionant en mode autonome de manière classique, ou bien à partir d'une position antérieure du récepteur GNSS ou encore à partir d'une estimation fournie par un autre système de positionnement tel qu'un système inertiel. Il initialise à zéro ou à une valeur précédemment estimée le décalage de son horloge interne par rapport à l'horloge de référence satellitaire. Enfin, il détermine également les positions des satellites en visibilité à partir des messages d'éphémérides émis par ces satellites. Cette phase d'intialisation lui permet ainsi d'obtenir une première estimation du vecteur ***X***, soit ***X̂***(0).

Dans une seconde phase, on résout une équation de navigation globale de manière itérative. Cette équation de navigation est globale au sens où elle porte sur tout ou partie de l'ensemble des récepteurs GNSS vérifiant les conditions (2-1) et (2-2). Elle se distingue par conséquent d'une équation de navigation classique portant sur un seul récepteur GNSS, considéré isolément.

On rappelle que l'équation de navigation d'un récepteur GNSS *RXᵢ* fait intervenir la matrice jacobienne (dite aussi matrice géométrique) ***Hᵢ*** de taille *Ki* × 4 obtenue par linéarisation de la fonction d'observation ***hᵢ*** du recepteur *RXᵢ* au point de dernière estimation ***X̂_{RXi}*(*t -* 1)** : ${H}_{i} = \left[\begin{matrix}- {u}_{i , j \left(1\right)}^{T} & 1 \\ ⋮ & ⋮ \\ - {u}_{i , j \left(Ki\right)}^{T} & 1\end{matrix}\right]$ où *Ki = Card*(*V*(*RXᵢ*)) et ***u***_{*i,j*(1)},*...,**u***_{*i,j*(*Ki*)} sont les vecteurs directeurs des droites joignant le récepteur *RXᵢ* et les satelittes *SAT*_{*j*(1)},*..., SAT*_{*j*(*Ki*)} en visibilité de *RXᵢ.* Le vecteur ***X_{RXi}*** donnant la position et le décalage d'horloge du récepteur *RXᵢ* peut être estimé par approximations successives au moyen de l'algorithme de Gauss-Newton: ${δρ}_{i} \left(t\right) = {ρ}_{i} \left(t\right) - {h}_{i} \left({\hat{X}}_{RXi}\left(t-1\right)\right)$ $δ {\hat{X}}_{RXi} \left(t\right) = {\left({H}_{i}^{T}\left(t\right)W{H}_{i}\left(t\right)\right)}^{- 1} {H}_{i}^{T} \left(t\right) W {δρ}_{i} \left(t\right)$ ${\hat{X}}_{RXi} \left(t\right) = {\hat{X}}_{RXi} \left(t-1\right) + δ {\hat{X}}_{RXi} \left(t\right)$ où ***δρᵢ*** est un vecteur de taille *Ki* dont les éléments sont les différences de pseudodistances *ρ_{i,j}, j = j*(1),..., *j*(*Ki*) entre celles mesurées et celles estimées à partir du vecteur d'état de l'itération précédente, ***W*** est une matrice diagonale de pondération, par exemple égale à l'inverse de matrice de covariance des erreurs de mesure sur les pseudodistances (supposées décorrélées), ***δX̂_{RXi}*** est un vecteur de taille 4 donnant les corrections à apporter à la position et au décalage d'horloge du récepteur en question par rapport à la dernière estimation précédente, et ***t*** est un indice temporel représentant l'instant de mesure (*epoch*)*.*

A la différence de l'équation de navigation du récepteur GNSS *RXᵢ*, l'équation de navigation globale des *N* récepteurs GNSS fait intervenir une matrice géométrique ***H_{G}*** de taille (*K +* 3*M*) × (4*N +* 3*M*) : ${H}_{G} = \left[\begin{matrix}H & S \\ {0}_{3 M \times 4 N} & {I}_{3 M}\end{matrix}\right] avec$ $H = \left[\begin{matrix}{H}_{1} & ⋯ & {0}_{4}^{T} \\ ⋮ & ⋱ & ⋮ \\ {0}_{4}^{T} & ⋯ & {H}_{N}\end{matrix}\right]$ $S = \left[\begin{matrix}{S}_{1} & ⋯ & {0}_{3}^{T} \\ ⋮ & ⋱ & ⋮ \\ {0}_{3}^{T} & ⋯ & {S}_{N}\end{matrix}\right] et {S}_{i} = \left[\begin{matrix}{u}_{i , j \left(1\right)}^{T} \\ ⋮ \\ {u}_{i , j \left(Ki\right)}^{T}\end{matrix}\right]$ où $K = {\sum }_{i = 1}^{N} Ki$ est le nombre total de pseudodistances mesurées par les récepteurs GNSS, **0_{3*M*×4*N*}** est la matrice nulle de taille 3*M* × 4*N,* ***I*_{3*M*}** est la matrice unité de taille 3*M* × 3*M,* **0₄** et **0₃** les vecteurs-colonne nuls de taille 4 et 3 respectivement.

Le fait de considérer désormais un modèle global prenant en compte l'ensemble des récepteurs GNSS et des satellites permet de réduire les erreurs qui affecteraient les positions des récepteurs si ces derniers opéraient de manière indépendante.

Le vecteur ***X^{T}*** donnant, d'une part, les positions des différents récepteurs GNSS et les décalages de leurs horloges internes et, d'autre part les positions des différents satellites, peut être estimé (au sens d'une estimation LSE) par approximations sucessives à partir du résidu d'observation ***δY*** (différence entre l'observation réelle et l'observation théorique ***h***(***X̂***(***t** -* 1)) calculée à partir du vecteur d'état de l'itération précédente, où ***h*** est la fonction d'observation globale de l'ensemble des récepteurs GNSS) : $δ Y \left(t\right) = Y \left(t\right) - h \left.\left(\hat{X}\left(t-1\right)\right)\right)$ $δ \hat{X \left(t\right)} = {\left.\left({H}_{G}{\left(t\right)}^{T}W{H}_{G}\left(t\right)\right)\right)}^{- 1} {H}_{G} {\left(t\right)}^{T} W δ Y \left(t\right)$ $\hat{X} \left(t\right) = \hat{X} \left(t-1\right) + δ \hat{X \left(t\right)}$ les itérations se poursuivant jusqu'à ce qu'un critère d'arrêt soit satisfait, par exemple jusqu'à ce que la norme du vecteur de mise à jour, **∥*δX̂*∥**, soit inférieure à un seuil prédéterminé ou qu'un nombre maximal d'itérations soit atteint. La matrice diagonale ***W*** de taille (*K +* 3*M* ) x (*K +* 3*M*) est une matrice de pondération égale, par exemple, à l'inverse de la matrice de covariance de ***δY***.

Selon une variante, le vecteur d'état ***X̂*** peut être obtenu de manière connue en soi, par filtrage de Kalman, au moyen d'un modèle récursif de transition d'état et un modèle d'observation fournissant une prédiction de ***Y*** à partir de l'état ***X*.** Le filtrage du vecteur d'état permet d'améliorer le rapport signal sur bruit des positions des récepteurs GNSS.

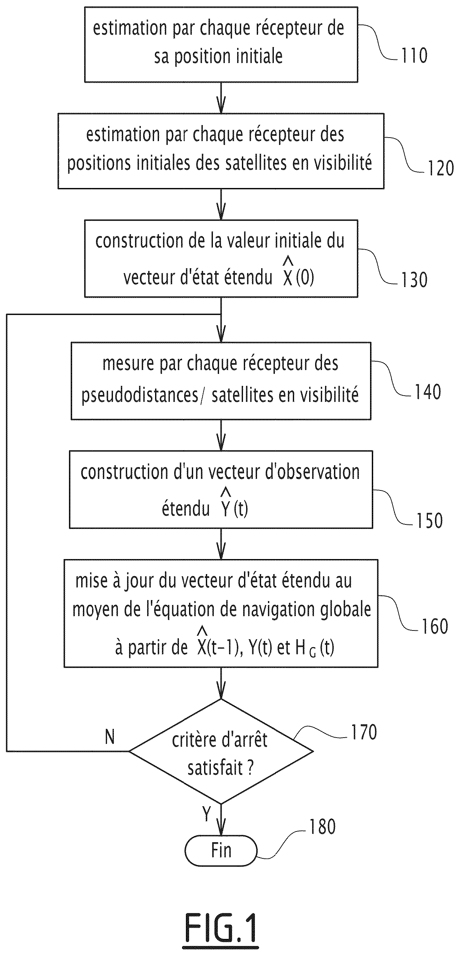

La figure 1 représente de manière schématique une méthode de positionnement GNSS selon un mode général de réalisation de l'invention.

On considère à nouveau le scenario d'un système de positionnement GNSS à *M* satellites et *N* récepteurs GNSS vérifiant les conditions (2-1) et (2-2). Si l'ensemble des récepteurs ne vérifie pas ces conditions on réduit cet ensemble à un sous-ensemble les vérifiant comme décrit plus loin.

Dans une première étape 110, chacun des récepteurs effectue une estimation de sa position de manière indépendante. Cette estimation peut être réalisée par le récepteur GNSS, ou bien celle fournie par un système inertiel de la plateforme voire par un système de communication radio. Chacun des récepteurs initialise également la valeur de décalage de son horloge interne par rapport à l'horloge de référence du système de positionnement.

Dans une seconde étape, 120, chacun des récepteurs effectue une estimation des positions des différents satellites qu'il a en visibilité à partir des messages d'éphémérides reçus de ces derniers.

Chacun des récepteurs est également configuré pour transmettre les positions satellites estimées et/ou reçues au(x) récepteur(s) ayant un même satellite en visibilité en commun. Autrement dit, chacun des récepteurs à accès à l'ensemble des positions satellites via une étape de communication globale.

A l'étape, 130, on construit (de manière centralisée ou distribuée) la valeur initiale d'un vecteur d'état étendu, ***X̂***(0), de taille 4*N* + 3*M*, représentatif des positions estimées des différents récepteurs GNSS, des décalages de leurs horloges internes et des positions des différents satellites.

La méthode de positionnement se poursuit ensuite en itérant les étapes 140-160 jusqu'à ce qu'un critère d'arrêt 170 soit satisfait.

A l'étape 140, chacun des récepteurs effectue à l'instant ***t*** correspondant à cette étape, une mesure des pseudodistances qui le séparent des différents satellites en visibilité et estime les positions de ces satellites à partir des messages d'éphémérides reçus de ces derniers.

A l'étape 150, on construit (de manière centralisée ou distribuée) un vecteur d'observation étendu, ***Y***(***t***)*,* de taille *K +* 3*M,* représentatif des pseudodistances et des positions des différents satellites à l'instant ***t*.**

A l'étape 160, on estime une nouvelle valeur du vecteur d'état étendu, ***X̂***(*t*)*,* à partir de sa valeur à l'instant ***t*** - **1,** , ***X̂***(*t* - 1), du vecteur d'observation étendu obtenu à l'étape courante et d'une matrice géométrique globale, ***H_{G}**,* dépendant des vecteurs directeurs (***u***_{*i,j*(1)},...,***u**i*_{*,j*(*Ki*)}), *i* = 1,...,*N* ) des droites joignant chacun des *N* récepteurs GNSS aux satellites qu'il a en visibilité, selon les expressions (8-1), (8-2) et (8-3).

A l'étape 170, on teste si le critère d'arrêt est satisfait. Dans l'affirmative le processus itératif s'arrête en 180, et dans le cas contraire, on retourne à l'étape 140.

A l'étape 180, la dernière estimation du vecteur d'état étendu donne les positions des différents récepteurs GNSS ainsi que les décalages respectifs de leurs horloges internes par rapport à l'horloge de référence satellitaire.

La méthode de positionnement GNSS collaboratif présentée ci-dessus peut se décliner selon un mode de réalisation centralisé et un mode de réalisation distribué.

Le mode de réalisation centralisé suppose d'effectuer un traitement préalable du graphe de visibilité entre les récepteurs et les satellites du système de positionnement GNSS. On désigne ici par graphe de visibilité un graphe dont les nœuds sont les récepteurs et les satellites du système de positionnement GNSS, une arête reliant un récepteur avec un satellite si ce dernier est en visibilité du premier. Seuls les nœuds représentant les récepteurs dont les degrés sont supérieurs ou égaux à 4 sont retenus de manière à satisfaire la condition (2-1).

Le graphe de visibilité est biparti dans la mesure où il peut être partitionné en deux sous-ensembles de nœuds disjoints, un premier sous-ensemble étant constitué par les récepteurs GNSS et un second sous-ensemble par les satellites du système de positionnement, aucune arête du graphe ne reliant deux nœuds appartenant au premier sous-ensemble ou deux nœuds appartenant au second sous-ensemble.

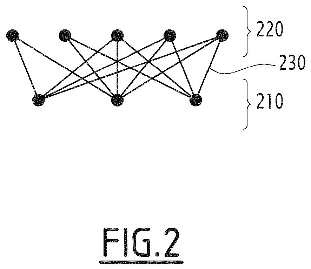

La figure 2 illustre de manière schématique un exemple de graphe de visibilité, les récepteurs GNSS formant un premier sous-ensemble, 210, de nœuds et les satellites du système de positionnement formant un second sous-ensemble, 220, de nœuds disjoint du premier. Une arête 230 entre un récepteur du premier-sous ensemble et un satellite du second sous-ensemble signifie que le satellite en question est visible de ce récepteur.

Le traitement préalable du graphe comprend une étape de partitionnement et une étape d'élimination.

Le partitionnement consiste à décomposer le graphe de visibilité en composantes connexes. En effet, deux composantes du graphe qui ne sont pas connexes, c'est-à-dire qui ne sont reliées par aucune arête ne peuvent améliorer mutuellement l'estimation des positions de leurs nœuds au moyen de la méthode de positionnement collaboratif décrite plus haut.

Les composantes connexes qui correspondent à des graphes en étoile ou à des graphes bipartis complets sont ensuite éliminées.

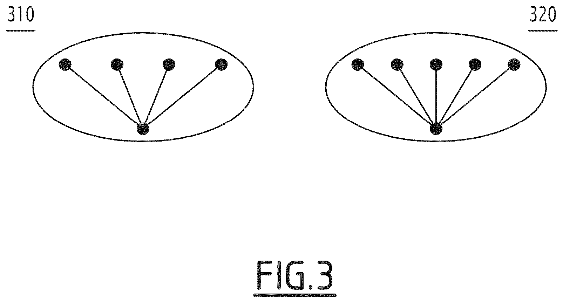

La Fig. 3 représente de manière schématique deux composantes connexes d'un graphe de visibilité à l'issue de l'étape de partitionnement. Les deux composantes 310, 320 possèdent chacune une structure en étoile. Une telle structure en étoile relie un récepteur unique à une pluralité (au moins 4) de satellites, et exclut par conséquent le partage d'un satellite en visibilité avec un autre récepteur. Ces composantes sont par conséquent exclues du graphe.

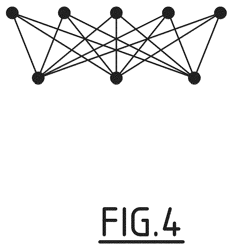

La Fig. 4 représente de manière schématique une composante connexe du graphe de visibilité à l'issue de l'étape de partitionnement. Cette composante présente une structure de graphe biparti complet puisque chaque récepteur est relié à tous les satellites. Cette structure n'offre pas non plus de possibilité de réduction des erreurs de position des récepteurs dans la mesure où les jeux de pseudodistances mesurées par les différents récepteurs sont affectés par les mêmes erreurs. Une telle composante est par conséquent exclue du graphe.

Chaque composante connexe du graphe de visibilité, obtenue après les étapes de partitionnement et d'élimination vérifie la condition (2-2) et la méthode de positionnement collaboratif précédemment décrite peut donc lui être appliquée.

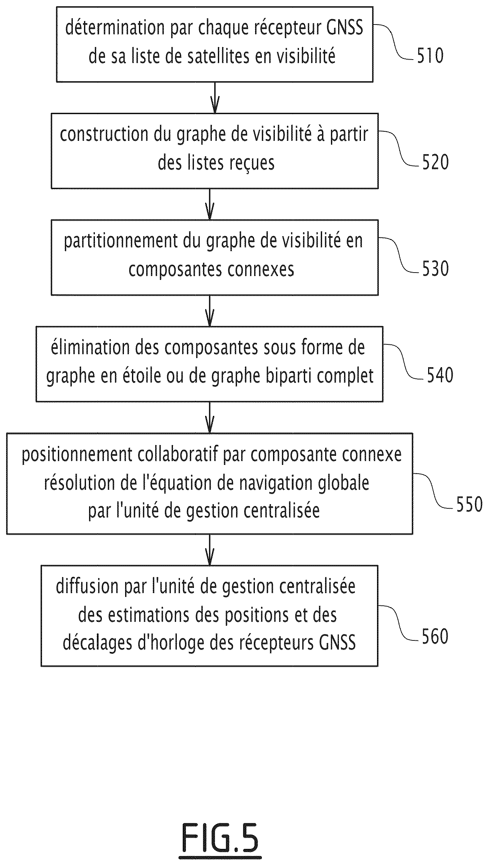

La figure 5 illustre de manière schématique une méthode de positionnement GNSS selon un mode centralisé de réalisation de l'invention.

Dans une première étape 510, chaque récepteur GNSS *RXᵢ* établit sa liste de satellites en visibilité, *V*(*RXᵢ*) et les transmet par liaison radio à une unité de gestion centralisée du positionnement. L'unité de gestion centralisée pourra être un serveur de calcul en périphérie de réseau (*edge server*)*,* un serveur distant ou encore être embarqué à bord d'un récepteur GNSS spécifique.

A l'étape 520, l'unité de gestion centralisée construit le graphe de visibilité biparti à partir des listes *V*(*RXᵢ*) transmis par les récepteurs GNSS. Les récepteurs dont les degrés *Card*(*V*(*RXᵢ*)) < 4 ne sont pris en considération dans le graphe.

A l'étape 530, l'unité de gestion centralisée effectue un partitionnement du graphe en composantes connexes.

A l'étape 540, l'unité de gestion centralisée élimine du graphe biparti les composantes connexes ayant une structure de graphe en étoile ou la structure d'un graphe complet biparti.

L'unité de gestion centralisée traite ensuite tour à tour chaque composante connexe issue des étapes 530 et 540 en lui appliquant en 550 la méthode de positionnement collaboratif illustré en Fig. 1. Plus précisément, l'unité de gestion centralisée construit le vecteur étendu initial ***X̂***(0) à partir des positions initiales et les décalages d'horloge interne des récepteurs GNSS, qui sont transmis au dit centre et des positions estimées des différents satellites en visibilité à partir des messages d'éphémérides. Ces positions peuvent être estimées de manière centralisée par l'unité de gestion centralisée ou bien par les différents récepteurs puis transmises à ladite unité. De manière similaire, à chaque itération ***t**,* l'unité de gestion centralisée construit le vecteur d'observation étendu, ***Y***(***t***)*, à* partir des pseudodistances ou données brutes (*raw data*) transmises par les différents récepteurs et des positions des satellites en visibilité estimées à l'instant ***t*** (de manière centralisée ou par les récepteurs). Les positions (et décalages d'horloge interne) des récepteurs de chaque composante connexe sont obtenues par l'unité de gestion centralisée au terme du processus itératif comme expliqué en relation avec les étapes 150, 160 et 170 de la Fig. 1,

L'unité de gestion centralisée diffuse ensuite en 560 les estimations des positions/ décalages d'horloge interne ainsi obtenues à l'ensemble des nœuds (récepteurs GNSS) de la composante connexe en question. Ces estimations sont sensiblement améliorées par rapport à celles qui auraient été obtenues par chacun des récepteurs individuellement.

Le processus est répété pour chaque composante connexe.

Alternativement la méthode de positionnement GNSS collaboratif peut être mise en œuvre de manière distribuée.

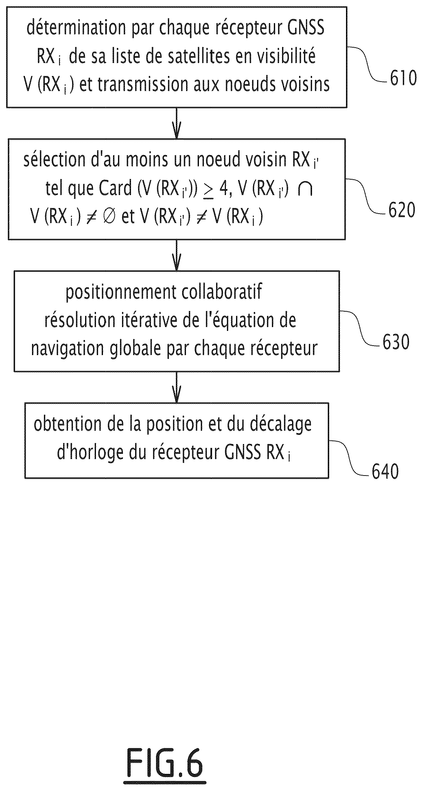

La figure 6 illustre de manière schématique une méthode de positionnement GNSS selon un mode distribué de réalisation de l'invention.

Dans une première étape 610, chaque récepteur GNSS *RXᵢ* établit sa liste de satellites en visibilité, *V*(*RXᵢ*) et la diffuse par voie radio à ses voisins. Corrélativement, il reçoit des récepteurs voisins *RXᵢ*, leurs listes de satellites en visibilité *V*(*RXᵢ,*).

Dans une seconde étape, 620, au moins un récepteur GNSS *RXᵢ* s'assure à partir de ces listes qu'au moins un récepteur voisin *RXᵢ*, vérifie bien les conditions (2-1) et (2-2), autrement dit *Card*(*V*(*RXᵢ,*)) ≥ 4, *V*(*RXᵢ,*) ∩ *V*(*RXᵢ*) *≠* ∅ et *V*(*RXᵢ,*) *≠ V*(*RXᵢ*).

Dans une troisième étape, 630, le récepteur GNSS *RXᵢ* et au moins un récepteur GNSS voisin *RXᵢ*, appliquent la méthode de positionnement collaboratif illustré en Fig. 1. La méthode de positionnement collaboratif peut avantageusement s'étendre à tous les récepteurs GNSS appartenant à la même composante connexe du graphe de visibilité. Toutefois, à la différence du mode de réalisation centralisé, la découverte d'une composante connexe pourra être réalisée par exemple au moyen d'une propagation de nœud en nœud des listes de visibilité (ou d'une coloration des composantes connexes, chaque composante connexe étant colorée d'une couleur différente).

En outre, dans ce mode de réalisation, le vecteur étendu initial ***X̂***(0) est construit par chacun des récepteurs *RXᵢ* et *RXᵢ*, à partir de données de positions initiales et de décalages d'horloge interne échangées entre eux. De manière similaire, à chaque itération ***t*,** chacun des récepteurs construit le vecteur d'observation étendu ***Y***(***t***)*,* à partir des pseudodistances ou données brutes (*raw data*) et des positions des satellites en visibilité estimées à l'instant ***t*,** échangées entre les récepteurs. Chaque récepteur effectue ensuite en parallèle le processus itératif décrit en relation avec les étapes 150, 160 et 170 de la Fig. 1. Au terme du processus itératif, chacun des récepteurs GNSS participant au positionnement coopératif dispose en 650 d'une estimation améliorée de sa position/ du décalage de son horloge interne.

L'amélioration de l'estimation de la position/du décalage de l'horloge interne du récepteur au moyen du positionnement collaboratif par rapport à une positionnement individuel est d'autant plus sensible que le nombre de satellites en visibilité est faible (mais néanmoins supérieur ou égal à 4), que les récepteurs voisins ont eux-mêmes des récepteurs voisins avec lesquels ils peuvent effectuer un positionnement collaboratif.

## Revendications

1. Méthode de positionnement satellitaire GNSS mettant en œuvre une pluralité de satellites et une pluralité de récepteurs GNSS voisins, chaque récepteur GNSS ayant au moins 4 satellites en visibilité, et partageant avec l'un des autres récepteurs GNSS voisins au moins un satellite en visibilité et ne partageant pas avec lui au moins un autre satellite en visibilité, ladite méthode étant **caractérisée en ce qu'**elle comprend :
- une étape d'initialisation (110, 120) dans laquelle chaque récepteur GNSS estime de manière indépendante sa position initiale et les positions des satellites qu'il a en visibilité, à partir de messages d'éphémérides reçus de ces derniers ;
- une étape de construction (130) d'une estimation initiale (***X̂***(0)) d'un vecteur d'état étendu (X), ledit vecteur d'état étendu étant obtenu par concaténation d'un premier vecteur d'état (***X_{RX}***) donnant les positions et les décalages d'horloge des récepteurs GNSS par rapport à une horloge de référence satellitaire et d'un second vecteur d'état (***X_{SAT}***) donnant les positions des différents satellites ;
et, jusqu'à ce qu'un critère d'arrêt (170) soit satisfait, une séquence d'itérations successives, chaque itération comprenant:
- une étape de mesure (140) par chaque récepteur GNSS (*RXᵢ*) des pseudodistances (*ρ_{i,j}*) relatives à chaque satellite qu'il a en visibilité ;
- une étape de construction (150) d'un vecteur d'observation étendu (Y) par concaténation d'un troisième vecteur (***Y_{PR}***) donnant lesdites pseudodistances pour chacun des récepteurs GNSS et d'un quatrième vecteur donnant les positions des satellites (***Y_{SAT}***) en visibilité de chaque récepteur;
- une étape de mise à jour (160) d'une estimation du vecteur d'état étendu à partir de l'estimation de ce vecteur obtenue à l'itération précédente, du vecteur d'observation étendu (***Y***(***t***) obtenu à l'étape courante et d'une matrice géométrique globale dépendant des vecteurs directeurs des droites joignant chacun des récepteurs GNSS aux satellites qu'il a en visibilité ;
les positions des récepteurs GNSS et/ou les décalages de leurs horloges internes respectives étant donné(e)s par l'estimation du vecteur d'état étendu obtenue à la dernière itération.

2. Méthode de positionnement satellitaire GNSS selon la revendication 1, **caractérisée en ce que** la matrice géométrique globale est une matrice de taille (*K +* 3*M*) × (4*N* + 3*M*) où *N* est le nombre de récepteurs GNSS, *M* est le nombre de satellites et K est le nombre de pseudodistances mesurées par l'ensemble des récepteurs GNSS, définie par : ${H}_{G} = \left[\begin{matrix}H & S \\ {0}_{3 M \times 4 N} & {I}_{3 M}\end{matrix}\right] avec H = \left[\begin{matrix}{H}_{1} & ⋯ & {0}_{4}^{T} \\ ⋮ & ⋱ & ⋮ \\ {0}_{4}^{T} & ⋯ & {H}_{N}\end{matrix}\right] et$ $S = \left[\begin{matrix}{S}_{1} & ⋯ & {0}_{3}^{T} \\ ⋮ & ⋱ & ⋮ \\ {0}_{3}^{T} & ⋯ & {S}_{N}\end{matrix}\right] avec {S}_{i} = \left[\begin{matrix}{u}_{i , j \left(1\right)}^{T} \\ ⋮ \\ {u}_{i , j \left(Ki\right)}^{T}\end{matrix}\right]$ ∘ **0_{3*M*×4*N*}** est la matrice nulle de taille *3M* × *4N,* ***I*_{3*M*}** est la matrice unité de taille 3*M* × 3*M,* **0₄** et **0₃** les vecteurs-colonne nuls de taille 4 et 3 respectivement, ***H*₁***...**H_{N}*** les matrices géométriques de chacun des récepteurs GNSS, ***u***_{*i,j*(1)},...,***u***_{*i,j*(*Ki*)} sont les vecteurs directeurs des droites joignant le récepteur GNSS *RXᵢ* et les satelittes en visibilité de *RXᵢ*

3. Méthode de positionnement satellitaire GNSS selon la revendication 2, **caractérisée en ce que** l'étape de mise à jour du vecteur étendu est effectuée par $\hat{X} \left(t\right) = \hat{X} \left(t-1\right) + δ \hat{X \left(t\right)}$ avec $δ \hat{X \left(t\right)} = {\left.\left({H}_{G}{\left(t\right)}^{T}W{H}_{G}\left(t\right)\right)\right)}^{- 1} {H}_{G} {\left(t\right)}^{T} W δ Y \left(t\right)$ où ***W*** est une matrice de pondération , ***δY***(***t***) est la différence entre le vecteur d'observation étendu construit à l'itération courante et un vecteur d'observation théorique ***h***(***X̂***(***t** -* **1)), *t*** est l'indice temporel de l'itération courante, et ***t* - 1** celui de l'itération précédente.

4. Méthode de positionnement satellitaire GNSS selon la revendication 3, **caractérisée en ce que** la matrice de pondération est l'inverse de la matrice de covariance de ***δY***(***t***)*.*

5. Méthode de positionnement satellitaire GNSS selon la revendication 1, **caractérisée en ce que** le vecteur d'état étendu est filtré par un filtrage de Kalman.

6. Méthode de positionnement satellitaire GNSS selon l'une des revendications précédentes, **caractérisée en ce que**, dans une étape préalable à l'étape d'initialisation, chacun des récepteurs GNSS établit la liste des satellites qu'il a en visibilité et les transmet à une unité de gestion centralisée, et que cette dernière construit un graphe de visibilité biparti dont les nœuds sont lesdits récepteurs GNSS et lesdits satellites, les récepteurs GNSS dont les degrés étant inférieurs à 4 n'étant pas compris dans ledit graphe, une arête reliant un récepteur GNSS à un satellite si ce dernier est en visibilité du premier.

7. Méthode de positionnement satellitaire GNSS selon la revendication 6, **caractérisée en ce que** l'unité de gestion centralisée effectue une décomposition du graphe de visibilité en composantes connexes et élimine celles ayant une structure de graphe en étoile ainsi que celles ayant une structure de graphe complet, ladite méthode de positionnement GNSS opérant sur chacune des composantes connexes restantes.

8. Méthode de positionnement satellitaire GNSS selon la revendication 7, **caractérisée en ce qu'**à l'étape d'initialisation, chacun des récepteurs GNSS transmet à l'unité de gestion centralisée l'estimation de sa position initiale ainsi que l'estimation des positions des satellites qu'il a en visibilité, qu'à l'étape de mesure chacun des récepteurs GNSS transmet à l'unité de gestion centralisée les pseudodistances le séparant des satellites qu'il a en visibilité, et que les étapes de construction de valeur initiale du vecteur d'état étendu, de construction du vecteur d'observation étendu et de mise à jour du vecteur d'état étendu par itérations successives sont effectuées par le centre de gestion centralisée.

9. Méthode de positionnement satellitaire GNSS selon la revendication 8, **caractérisée en ce qu'**au terme de la dernière itération, l'unité de gestion centralisée diffuse à l'ensemble des récepteurs l'estimation courante du vecteur d'état étendu et que chaque récepteur GNSS en déduit une estimation de sa position et/ou du décalage de son horloge interne par rapport à l'horloge de référence satellitaire.

10. Méthode de positionnement satellitaire GNSS selon l'une des revendications 1 à 5, **caractérisée en ce que**, dans une étape préalable à l'étape d'initialisation, chacun des récepteurs GNSS établit la liste des satellites qu'il a en visibilité et la diffuse aux récepteurs GNSS voisins, et qu'au moins un récepteur GNSS sélectionne au moins un récepteur GNSS voisin avec lequel il partage un satellite en visibilité et ne partage pas un autre satellite en visibilité, seuls les récepteurs GNSS ayant au moins 4 satellites en visibilité étant pris en considération.

11. Méthode de positionnement satellitaire GNSS selon la revendication 10, **caractérisée en ce qu'**à l'étape d'initialisation, ledit récepteur GNSS et le au moins récepteur GNSS voisin sélectionné échangent entre eux les estimations de leurs positions initiales et les positions des satellites qu'ils ont en visibilité, qu'à l'étape de mesure ils échangent les pseudodistances les séparant des satellites qu'ils ont respectivement en visibilité et que les étapes de construction de valeur initiale du vecteur d'état étendu, de construction du vecteur d'observation étendu et de mise à jour par itérations successives du vecteur d'état étendu sont effectuées en parallèle par chacun d'entre eux.
